# EUROPÄISCHE PATENTSCHRIFT

(11) **EP 2 019 242 B1**
(45) Veröffentlichungstag und Bekanntmachung des Hinweises auf die Patenterteilung: **09.11.2011**
(21) Anmeldenummer: 08012857.2
(22) Anmeldetag: 16.07.2008
(51) Int. Cl.: F16L 9/00, F16L 9/18, F16L 11/11, F16L 11/15, F24F 13/02, H02G 3/04, F16L 3/237

(54) **Rohr und Kombination zweier derartiger Rohre**
Pipe and combination of two such pipes
Tuyau et association de deux tuyaux de ce type

(30) Priorität: 23.07.2007 DE 102007034244
(43) Veröffentlichungstag der Anmeldung: 28.01.2009
(73) Patentinhaber: FRÄNKISCHE ROHRWERKE Gebr. Kirchner GmbH & Co. KG, 97486 Königsberg (DE)
(72) Erfinder: Büttner, Matthias, 96106 Ebern (DE)
(74) Vertreter: Herzog, Markus

(56) Entgegenhaltungen:
- EP-A- 1 213 527
- WO-A-2005/086304
- WO-A1-2004/001298
- DE-A1-102006 056 415
- DE-U1- 20 004 828
- DE-U1-202005 007 835
- US-A1- 2004 250 403

## Beschreibung

Die Erfindung betrifft ein Rohr, insbesondere zum Einsatz als Führungskanal für Luft oder dergleichen Gase bzw. Gasmischungen oder als Versorgungskanal für. Leitungen, nach dem Oberbegriff des Anspruchs 1.

Derartige Rohre müssen häufig unter räumlich äußerst beschränkten Bedingungen verlegt werden. Beispielsweise bei der Verlegung im Fußbodenestrich steht nur eine begrenzte Bauhöhe zur Verfügung. Man ist daher im Stand der Technik bereits seit langem von der Verwendung von Rohren mit kreisförmigem Querschnitt abgekommen, sondern verwendet Rohre mit einem länglichen Querschnitt. So ist beispielsweise aus der gattungsbildenden DE 27 52 622 A1 ein Wellrohr mit elliptischem Querschnitt bekannt geworden. Es werden aber auch ovale Querschnitte verwendet. Allen diesen Querschnittformen ist der Nachteil gemeinsam, über keine ausreichende Widerstandsfähigkeit gegenüber den beim Begehen des Fußbodens auf sie ausgeübten Belastungen zu verfügen.

Aus der gattungsbildenden WO-A-2005/086304 ist ein glattwandiges Rohr mit streng halbkreisförmigem Querschnitt bekannt, das als Kanal zur Aufnahme von Leitungen unterschiedlicher Art ausgebildet ist und hierzu einen glattwandigen Basisabschnitt und einen halbkreisförmigen Deckelabschnitt umfasst.

Aus der WO-A-2004/001298 ist ein Luftführungsrohr mit einem die Widerstandsfähigkeit erhöhenden Querschnitt bekannt.

Die US-A-2004/0250403 befasst sich mit der Abdichtung an der Verbindungsstelle zweier miteinander zu verbindender Rohre, die ebenfalls glattwandig ausgebildet sind. Dabei kommen unterschiedliche Querschnittsformen der zu verbindenden Rohre zur Sprache.

Die DE-U-200 04 828 offenbart glattwandige Lüftungsrohre unterschiedlicher Querschnittsformen.

Aus der DE-U-20 2005 007 835 und der DE-A-10 2006 056 415 sind ganz allgemein Wellrohre bekannt.

Aus der EP-A-1 213 527 ist schließlich ganz allgemein der Gedanke bekannt, die zwei Rohre kreisförmigen Querschnitts umgebenden Manteleinheiten mit einer ebenen und einer gekrümmten Oberfläche auszubilden und mit ihren aneinander anliegenden ebenen Oberflächen zu einer Baugruppe zu kombinieren.

Es ist daher Aufgabe der vorliegenden Erfindung, ein Rohr der eingangs genannten Art bereitzustellen, welches über eine erhöhte Widerstandsfähigkeit verfügt.

Diese Aufgabe wird erfindungsgemäß durch ein Rohr mit den Merkmalen des Anspruchs 1 gelöst. Das erfindungsgemäße Rohr legt sich mit seiner geradlinig verlaufenden Querschnittsseite im Wesentlichen vollflächig gegen den Untergrund an und stützt sich an diesem ab. Die von obenauf das Rohr ausgeübten Belastungen können daher über die gewölbeartig gekrümmt verlaufende Querschnittsseite in besonders effektiver Weise in die geradlinig verlaufende Querschnittsseite und damit in den Untergrund eingeleitet werden. Dabei ist der Querschnitt im Wesentlichen halbkreisförmig ausgebildet, wobei die geradlinig verlaufende Seite der Durchmesserlinie des Halbkreises entspricht und die gewölbeartig gekrümmt verlaufende Seite der Umfangslinie des Halbkreises. Gleichwohl verfügt das Rohr über die gleiche Querschnittsfläche wie ein Rohr mit elliptischem Querschnitt, welches die gleiche Höhe und die gleiche Breite aufweist.

Unabhängig vom exakten Verlauf der gewölbeartig gekrümmt verlaufenden Seite hat es sich als vorteilhaft erwiesen, wenn ihr Krümmungsradius zwischen dem etwa 0,7-fachen und dem etwa 1,1-fachen der Außenhöhe des Wellrohrs beträgt.

Sowohl in statischer als auch in fertigungstechnischer Hinsicht ist der Querschnitt des Rohrs erfindungsgemäß an wenigstens einer Übergangsstelle von der geradlinig verlaufenden Seite zu der gewölbeartig gekrümmt verlaufenden Seite abgerundet. Dabei kann der Krümmungsradius der Abrundung höchstens das etwa 0,3-fache der Außenhöhe des Wellrohrs betragen.

Wie aus dem Stand der Technik an sich bekannt ist, kann auch das erfindungsgemäße Rohr aus Kunststoff gefertigt sein.

Um den Strömungswiderstand des Innenraums des Rohrs zu verringern, kann es als doppelwandiges Rohr ausgebildet sein, beispielsweise dadurch, dass ein als Wellrohr ausgebildetes Außenrohr auf seiner Innenseite mit einem Innenrohr ausgekleidet ist. Dabei kann das Innenrohr mit wenigstens einem Teil der Wellentäler des Außenrohrs verbunden sein. Unabhängig davon kann das Innenrohr ein im Wesentlichen glattwandiges Rohr sein, was sich auf den Strömungswiderstand besonders vorteilhaft auswirkt. Es ist zur Sicherstellung einer ausreichenden Flexibilität aber auch möglich, auch das Innenrohr als Wellrohr auszubilden, und zwar im Hinblick auf gute Strömungseigenschaften als Wellrohr geringer Wellenamplitude.

Das erfindungsgemäße Rohr eignet sich aber nicht nur zur Verlegung im Fußbodenestrich, sondern kann auch an Wänden, unter Decken, in Schächten oder dergleichen verlegt werden. Von besonderem Vorteil ist die Verlegung einer Kombination zweier erfindungsgemäße Rohre, welche mit ihren den geradlinig verlaufenden Querschnittsseiten entsprechenden Flächen aneinander anliegen. Die beiden Rohre ergänzen sich nämlich dabei vorzugsweise zu einem vollkreisförmigen Querschnitt. Dies ermöglicht es, die Rohr-Kombination mit herkömmlichen Montageelementen zur Montage von Rohren mit vollkreisförmigem Querschnitt zu verlegen. Im Falle des Einsatzes des erfindungsgemäßen Rohrs als Führungskanal für Luft oder dergleichen Gase bzw. Gasmischungen, beispielsweise in einem Be- und Entlüftungssystem, kann dabei das eine Rohr zur Zufuhr von Frischluft und das andere Rohr zur Abfuhr von verbrauchter Luft verwendet werden.

Seine Wellenberge und seine Wellentäler können derart gestaltet sein, dass die Wellenberge und Wellentäler der beiden aneinander anliegenden Rohre nach Art einer Verzahnung ineinander greifen. Dies ist in mehrfacher Hinsicht vorteilhaft. Zum einen können die beiden aneinander anliegenden Rohre hierdurch in einfacher Weise gegen ein Verrutschen in ihrer Längsrichtung gesichert werden, und zum anderen kann hierdurch Bauraum gespart werden.

Die Montage der Rohr-Kombination kann dadurch erleichtert werden, dass die beiden Wellrohre von einem Klammerelement zusammengehalten sind. Dieses Klammerelement kann beispielsweise nach innen abstehende Rippen aufweisen, mit denen es in Wellentäler der beiden Wellrohre eingreift, um den Halt der beiden Rohre aneinander sicherzustellen. Dabei sind die dem einen Wellrohr zugeordneten Rippen relativ zu den dem anderen Wellrohr zugeordneten Rippen um eine Distanz versetzt angeordnet, die im Wesentlichen der halben Wellenperiode entspricht.

Das erfindungsgemäße Rohr kann beispielsweise eine Außenhöhe von höchstens 80 mm, vorzugsweise von höchstens 60 mm, und/oder eine Außenbreite von höchstens etwa 150 mm, vorzugsweise von höchstens etwa 120 mm, aufweisen. Als Materialien zur Herstellung des erfindungsgemäßen Rohrs kommen insbesondere Polypropylen (PP) und hochdichtes Polyethylen (PE-HD bzw. HDPE) in Betracht. Im Falle der doppelwandigen Ausführung des erfindungsgemäßen Rohrs gelten diese Angaben für das Außenrohr. Das Innenrohr kann beispielsweise aus thermoplastischem Elastomer (TPE), Polypropylen (PP), Polyethylen (PE), Polyamid (PA) oder Ethylenvinylacetat (EVA) gebildet sein.

Die Erfindung wird im folgenden an Ausführungsbeispielen an Hand der beigefügten Zeichnung näher erläutert werden. Es stellt dar:
- Figur 1: eine Seitenansicht eines erfindungsgemäßen Wellrohrs;
- Figur 2: eine längs der Linie II-II in Figur 1 genommene Schnittansicht des Wellrohrs gemäß Figur 1;
- Figur 3: eine vergrößerte und in Schnittdarstellung gehaltene Ansicht des Details III in Figur 1;
- Figur 4: eine perspektivische Ansicht eines Klammerelements zur Herstellung einer zwei Wellrohre umfassenden Kombination; und

Figuren 5 und 6 Ansichten ähnlich Figur 3 weiterer Ausführungsformen.

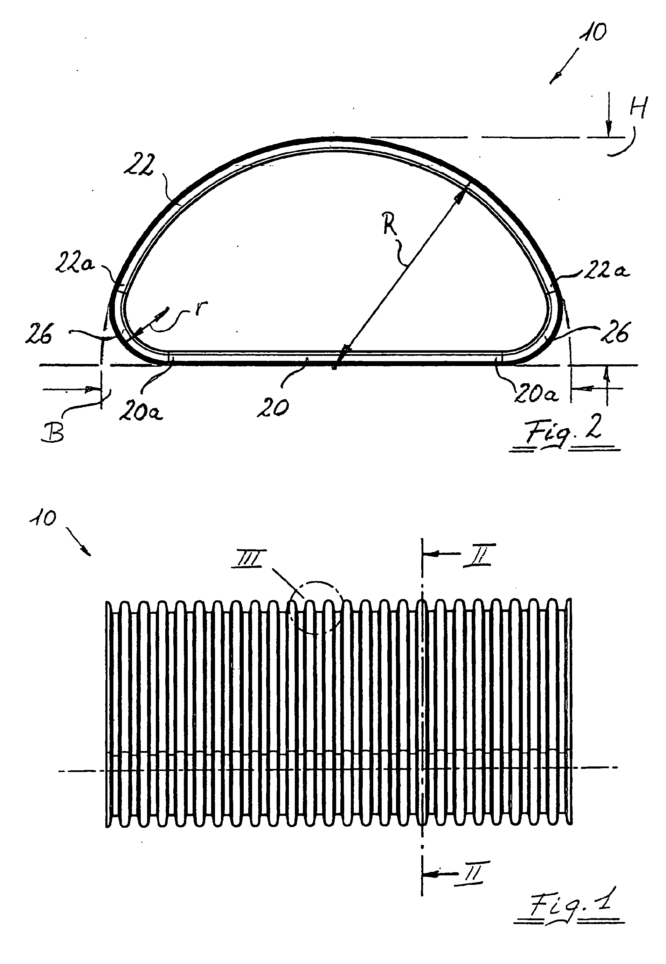

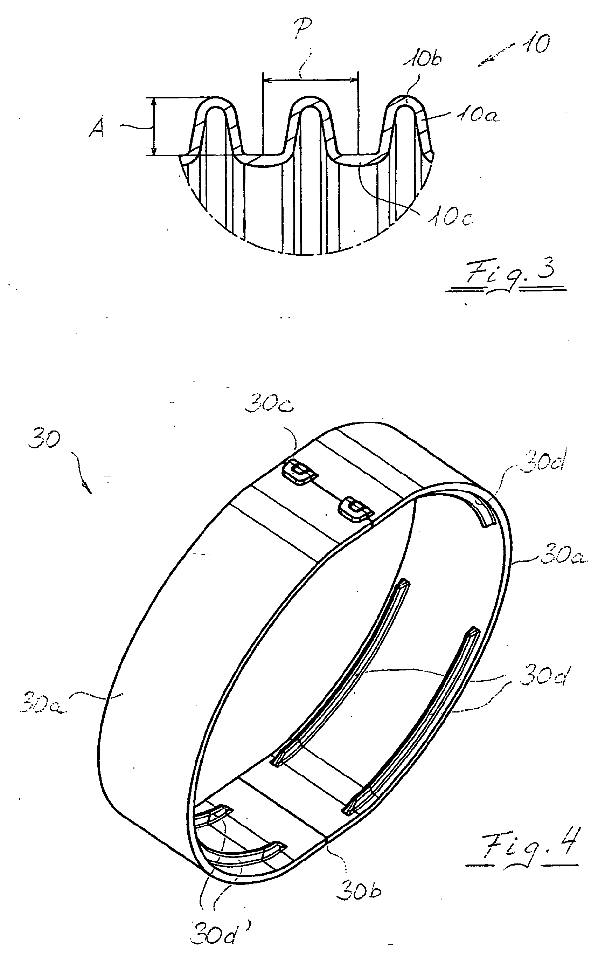

In Figur 1 ist ein erfindungsgemäßes Wellrohr ganz allgemein mit 10 bezeichnet. Wie dies an sich bekannt und in Figur 3 vergrößert dargestellt ist, weist.die Wandung 10a des Wellrohrs 10 einen im Wesentlichen sinusförmigen Verlauf mit Wellenbergen 10b und Wellentälern 10c auf. Dabei sind die Amplitude der Wellenform mit A und die Periode der Wellenform mit P bezeichnet.

Wie in Figur 2 dargestellt ist, verfügt.das Wellrohr 10 über einen Querschnitt, der jenem einer Brotscheibe ähnlich ist. Insbesondere verfügt es über eine im Wesentlichen geradlinig verlaufende Seite 20, deren beide Enden 20a mittels einer gewölbeartig gekrümmt verlaufenden Seite 22 verbunden sind. Der Krümmungsradius R der gewölbeartig gekrümmt verlaufenden Seite 22 beträgt vorzugsweise zwischen dem etwa 0,7- und dem etwa 1,1-fachen der Außenhöhe H des Wellrohrs 10.

Ferner sind bei dem Ausführungsbeispiel gemäß Figur 2 die Übergangsbereiche 26 zwischen der geradlinig verlaufenden Seite 20 und der gewölbeartig gekrümmt verlaufenden Seite 22 abgerundet ausgebildet, wobei der Krümmungsradius r dieser Abrundungen 26 höchstens das etwa 0,3-fache der Außenhöhe H des Wellrohrs 10 beträgt.

In dem in Figur 2 dargestellten Ausführungsbeispiel ist der Querschnitt des Wellrohrs 10 abgesehen von den Übergangsbereichen 26 im Wesentlichen halbkreisförmig ausgebildet, wobei die geradlinig verlaufende Seite 20 dem Durchmesser und die gewölbeartig gekrümmten Seite 22 der Umfangslinie des Halbkreises entspricht. Dies ist nicht nur in statischer.Hinsicht besonders vorteilhaft. Vielmehr können in diesem Fall auch zwei derartige Wellrohre 10 mit ihren geradlinig verlaufenden Seiten 20 gegeneinander gelegt werden und nehmen so einen insgesamt vollkreisförmigen Querschnitt ein.

Dies ist in mehrfacher Hinsicht vorteilhaft. Zum einen kann diese Wellrohr-Kombination in einfacher Weise mittels Montageelementen verlegt werden, wie sie für herkömmliche Rohre mit kreisförmigem Querschnitt zur Verfügung stehen. Und zum anderen kann das eine der beiden Wellrohre 10 zur Zuleitung, beispielsweise von Frischluft, und das andere der beiden Wellrohre 10 zur Ableitung, beispielsweise von verbrauchter Luft, verwendet werden.

Zur Vereinfachung des Verlegens einer derartigen Wellrohr-Kombination können die beiden Wellrohre 10 mittels eines Klammerelements 30 aneinander befestigt werden, wie es in Figur 4 dargestellt ist. Dieses Klammerelement 30 umfasst zwei Halbschalen 30a, die über ein Filmscharnier 30b miteinander gelenkig verbunden sind. Dem Filmscharnier 30b gegenüberliegend sind die Halbschalen 30a mit zwei Verrastungen 30c versehen, mittels derer sie aneinander befestigt werden können, nachdem sie um die beiden Wellrohre 10 herumgelegt worden sind.

Ferner ist an der Innenseite der beiden Halbschalen 30a eine Mehrzahl von Stegen bzw. Rippen 30d, 30d' vorgesehen, die zum Eingriff in die Wellentäler 10c der beiden Wellrohre 10 bestimmt sind. Da die Wellenberge 10b und die Wellentäler 10c derart gestaltet sind (siehe Figur 3), dass die Wellenberge 10b des einen Rohrs 10 in die Wellentäler 10c des jeweils anderen Rohrs 10 nach Art einer Verzahnung eingreifen können, weisen die dem einen Wellrohr 10 zugeordneten Rippen 30d relativ zu den dem anderen Wellrohr 10 zugeordneten Rippen 30d' einen Versatz auf, der im Wesentlichen der halben Wellen periode P entspricht (siehe Figur 4).

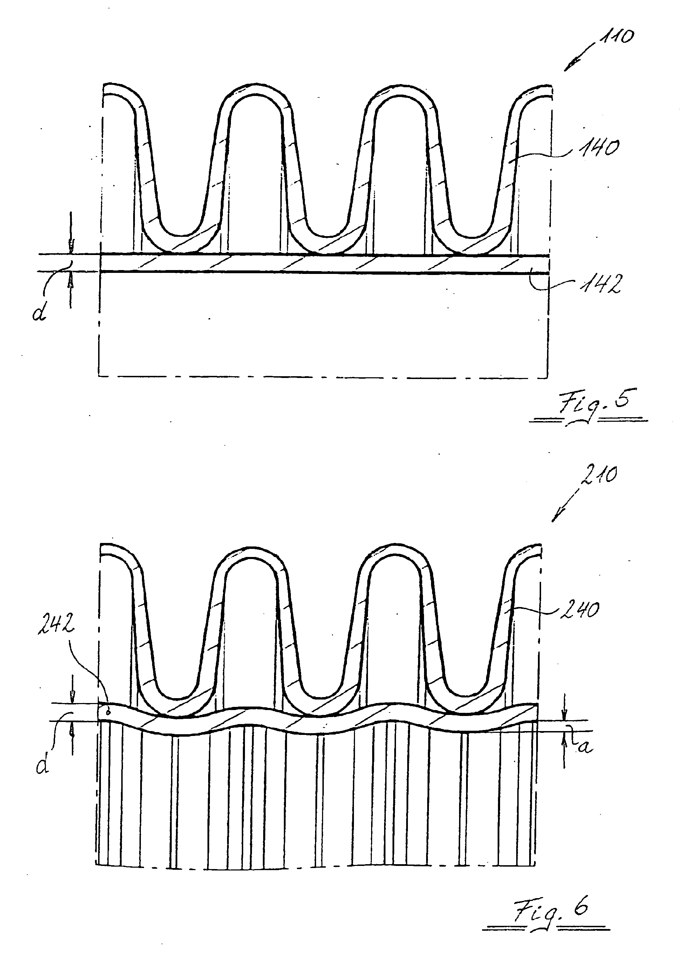

In Figur 5 ist eine weitere Ausführungsform eines erfindungsgemäßen Wellrohrs dargestellt, welches im Wesentlichen der Ausführungsform gemäß Figuren 1 bis 3 entspricht. Daher sind in Figur 5 analoge Teile mit den gleichen Bezugszeichen versehen wie in den Figuren 1 bis 3, jedoch vermehrt um die Zahl 100. Das Wellrohr 110 gemäß Figur 5 wird im Folgenden nur insoweit beschrieben werden, als es sich von dem Wellrohr 10 gemäß Figuren 1 bis 3 unterscheidet, auf dessen Beschreibung hiermit ansonsten ausdrücklich verwiesen sei.

Im Unterschied zu dem Wellrohr 10 gemäß Figuren 1 bis 3 ist das Wellrohr 110 gemäß Figur 5 doppelwandig ausgebildet. Und zwar umfasst es ein als Wellrohr ausgebildetes Außenrohr 140, hinsichtlich dessen Ausbildung auf die Beschreibung des Wellrohrs 10 gemäß Figuren 1 bis 3 verwiesen sei, und ein Innenrohr 142, das im dargestellten Ausführungsbeispiel glattwandig ausgebildet ist. Diese glattwandige Ausbildung hat besondere Vorteile in Anwendungsfällen, in denen ein geringer Strömungswiderstand gewünscht oder/und erforderlich ist. Um verhindern zu können, dass das glattwandige Innenrohr 142 die Flexibilität des doppelwandigen Wellrohrs 110 allzu sehr einschränkt, ist es vorteilhafterweise aus Elastomer-Material gebildet. Zudem kann eine Ausbildung des Innenrohrs 142 mit einer möglichst geringen Dicke d im Hinblick auf die Flexibilität des Gesamtrohrs 110 vorteilhaft sein.

Grundsätzlich ist es jedoch, wie in der Ausführungsvariante gemäß Figur 6 dargestellt ist, auch möglich, geringfügig von der streng glattwandigen Ausbildung des Innenrohrs abzuweichen, und auch das Innenrohr 242 als Wellrohr auszubilden, allerdings als Wellrohr, dessen Wellenamplitude a erheblich kleiner ist als die Wellenamplitude A (siehe Fig. 3) des Außenrohrs 240 des Gesamtrohrs 210, beispielsweise kleiner als 1/5 dieser Amplitude (a < 0,2 A). Eine weitere Flexibilisierung des doppelwandigen Rohrs 210 kann durch die Wahl des Materials für das Innenrohr 242, beispielsweise Elastomer-Material, und durch die Wahl von dessen Wandstärke d erzielt werden. Es versteht sich, dass hinsichtlich der weiteren Details auch zur Ausführungsform gemäß Figur 6 auf die vorstehenden Beschreibungen der Ausführungsformen gemäß Figuren 1 bis 3 und 5 verwiesen sei.

Das Innenrohr 142 bzw. 242 kann mit dem Außenrohr 140 bzw. 240 vorzugsweise koextrudiert sein.

## Patentansprüche

1. Rohr (10), insbesondere zum Einsatz als Führungskanal für Luft oder dergleichen Gase bzw. Gasmischungen oder als Versorgungskanal für Leitungen, weiches einen Querschnitt mit einer sich im Wesentlichen über die gesamte Breite (B) des Rohrs (10) erstreckenden geradlinig verlaufenden Seite (20) aufweist, deren beide Enden (20a) durch eine gewölbeartig gekrümmt verlaufende Seite (22) miteinander verbunden sind,
wobei der Querschnitt im Wesentlichen halbkreisförmig ausgebildet ist, wobei die geradlinig verlaufende Seite (20) der Durchmesserlinie des Halbkreises entspricht und die gewölbeartig gekrümmt verlaufende Seite (22) der Umfangslinie des Halbkreises,
**dadurch gekennzeichnet, dass** es ein Wellrohr ist und dass sein Querschnitt an wenigstens einer Übergangsstelle (26) von der geradlinig verlaufenden Seite (20) zu der gewölbeartig gekrümmt verlaufenden Seite (22) abgerundet ist.

2. Rohr nach Anspruch 1,
**dadurch gekennzeichnet, dass** der Krümmungsradius (R) der gewölbeartig gekrümmt verlaufenden Seite (22) zwischen dem etwa 0,7-fachen und etwa 1,1-fachen der Außenhöhe (H) des Rohrs (10) beträgt.

3. Rohr nach Anspruch 1 oder 2,
**dadurch gekennzeichnet, dass** der Krümmungsradius (r) der Abrundung (26) höchstens das etwa 0,3-fache der Außenhöhe (H) des Rohrs (10) beträgt.

4. Rohr nach einem der Ansprüche 1 bis 3,
**dadurch gekennzeichnet, dass** es aus Kunststoff gefertigt ist.

5. Rohr nach einem der Ansprüche 1 bis 4,
**dadurch gekennzeichnet, dass** das Wellrohr (140; 240) auf seiner Innenseite mit einem, vorzugsweise aus Kunststoff gefertigten, Innenrohr (142; 242) ausgekleidet ist, welches mit wenigstens einem Teil der Wellentäler des Wellrohrs (140; 240) verbunden ist und welches entweder ein im Wesentlichen glattwandiges Rohr (142) oder ein weiteres Wellrohr (242) ist.

6. Kombination zweier Rohre (10) nach einem der vorhergehenden Ansprüche, welche mit ihren den geradlinig verlaufenden Querschnittsseiten (20) entsprechenden Flächen aneinander anliegen.

7. Kombination nach Anspruch 6,
**dadurch gekennzeichnet, dass** im Falle der Kombination zweier Wellrohre (10) deren Wellenberge (10b) und Wellentäler (10c) derart gestaltet sind, dass die Wellenberge (10b) und Wellentäler (10c) der beiden aneinander anliegenden Rohre (10) nach Art einer Verzahnung ineinander greifen.

8. Kombination nach Anspruch 6 oder 7,
**dadurch gekennzeichnet, dass** die beiden Rohre (10) von einem Klammerelement (30) zusammengehalten sind.

9. Kombination nach Anspruch 8,
**dadurch gekennzeichnet, dass** das Klammerelement (30) nach innen abstehende Rippen (30d, 30d') aufweist, mit denen es in Wellentäler (10c) der beiden Rohre (10) eingreift.

10. Kombination nach Anspruch 9,
**dadurch gekennzeichnet, dass** die dem einen Wellrohr (10) zugeordneten Rippen (30d) relativ zu den dem anderen Wellrohr (10) zugeordneten Rippen (30d') um eine Distanz versetzt angeordnet sind, die im Wesentlichen der halben Wellenperiode (P) entspricht.

## Claims

1. A pipe (10), in particular for use as conveying duct for air or like gases or gas mixtures or as a supply duct for pipelines, which has a cross-section with side (20) which extends in a straight line essentially over the entire width (B) of the pipe (10) and the two ends (20a) of which are joined together by a side (22) extending arcuately curved,
wherein the cross-section is of substantially semicircular shape, wherein the side (20) extending in a straight line corresponds to the diametral line of the semicircle and the side (22) extending arcuately curved corresponds to the periphery of the semicircle,
**characterised in that** it is a corrugated pipe and **in that** its cross-section is rounded at at least one transition point (26) from the side (20) extending in a straight line into the side (22) extending arcuately curved.

2. A pipe according to Claim 1,
**characterised in that** the radius of curvature (R) of the side (22) extending arcuately curved amounts to between approximately 0.7 times and approximately 1.1 times the outer height (H) of the pipe (10).

3. A pipe according to Claim 1 or 2,
**characterised in that** the radius of curvature (r) of the rounded portion (26) amounts at most to approximately 0.3 times the outer height (H) of the pipe (10).

4. A pipe according to any one of Claims 1 to 3, **characterised in that** it is produced from plastics material.

5. A pipe according to any one of Claims 1 to 4, **characterised in that**, on its inside, the corrugated pipe (140;240) is lined with an inner pipe (142;242) which is preferably made of plastics material and is connected to at least one part of the corrugation valleys of the corrugated pipe (140;240) and which is either a substantially smooth-walled pipe (142) or a further corrugated pipe (242).

6. A combination of two pipes (10) according to any one of the preceding Claims, which abut against one another with their surfaces corresponding to the cross-sectional sides (20) extending in a straight line.

7. A combination according to Claim 6,
**characterised in that**, in the case of the combination of two corrugated pipes (10), their corrugation crests (10b) and corrugation valleys (10c) are configured so that the corrugation crests (10b) and corrugation valleys of the mutually abutting pipes (10) engage in one another in the manner of a toothing.

8. A combination according to Claim 6 or 7,
**characterised in that** the two pipes (10) are held together by a clip member (30).

9. A combination according to Claim 8,
**characterised in that** the clip member (30) has inwardly projecting ribs (30d,30d'), with which it engages into corrugation valleys (10c) of the two pipes (10).

10. A combination according to Claim 9,
**characterised in that** the ribs (30d) associated with one corrugated pipe (10) are arranged offset relative to the ribs (30d') associated with the other corrugated pipe (10) by a distance which corresponds substantially to half the corrugation period (P).

## Revendications

1. Tuyau (10), destiné en particulier à être utilisé comme canal de guidage pour de l'air ou des gaz ou mélanges de gaz similaires ou comme canal d'alimentation pour des conduites, qui présente une section transversale avec un côté (20) s'étendant en ligne droite sensiblement sur toute la largeur (B) du tuyau (10), dont les deux extrémités (20a) sont reliées entre elles par un côté (22) s'étendant de manière courbée comme une voûte,
dans lequel la section transversale est réalisée sensiblement en forme de demi-cercle, le côté (20) s'étendant en ligne droite correspondant à la ligne de diamètre du demi-cercle et le côté (22) s'étendant de manière courbée comme une voûte correspond à la ligne périphérique du demi-cercle, **caractérisé en ce qu'**il est un tuyau ondulé et **en ce que** sa section transversale est arrondie sur au moins un point de transition (26) du côté (20) s'étendant en ligne droite au côté (22) s'étendant de manière courbée comme une voûte.

2. Tuyau selon la revendication 1, **caractérisé en ce que** le rayon de courbure (R) du côté (22) s'étendant de manière courbée comme une voûte est compris environ entre 0,7 fois et 1,1 fois la hauteur extérieure (H) du tuyau (10).

3. Tuyau selon la revendication 1 ou 2, **caractérisé en ce que** le rayon de courbure (r) de l'arrondi s'élève au maximum environ à 0,3 fois la hauteur extérieure (H) du tuyau (10).

4. Tuyau selon l'une quelconque des revendications 1 à 3, **caractérisé en ce qu'**il est fabriqué en plastique.

5. Tuyau selon l'une quelconque des revendications 1 à 4, **caractérisé en ce que** le tuyau ondulé (140 ; 240) est revêtu sur son côté intérieur d'un tuyau intérieur (142 ; 242) fabriqué de préférence en plastique, qui est relié à au moins une partie des creux du tuyau ondulé (140 ; 240) et qui est un tuyau (142) à paroi sensiblement lisse ou un autre tuyau ondulé (242).

6. Association de deux tuyaux (10) selon l'une quelconque des revendications précédentes, qui reposent l'un sur l'autre par leurs surfaces correspondant aux côtés de section transversale s'étendant en ligne droite (20).

7. Association selon la revendication 6, **caractérisée en ce que** dans le cas de l'association de deux tuyaux ondulés (10), dont les sommets (10b) et creux (10c) sont conçus de telle manière que les sommets (10b) et les creux (10c) des deux tuyaux (10) reposant l'un sur l'autre s'engagent les uns dans les autres comme une denture.

8. Association selon la revendication 6 ou 7, **caractérisée en ce que** les deux tuyaux (10) sont maintenus ensemble par un élément d'agrafe (30).

9. Association selon la revendication 8, **caractérisée en ce que** l'élément d'agrafe (30) présente des nervures (30d, 30d') dépassant vers l'intérieur, avec lesquelles il s'engage dans des creux (10c) des deux tubes (10).

10. Association selon la revendication 9, **caractérisée en ce que** les nervures (30d) associées à un tuyau ondulé (10) sont disposées par rapport aux nervures (30d') associées à l'autre tuyau ondulé (10) en déport d'une distance qui correspond sensiblement à la demi-période d'onde (P).
